# EUROPEAN PATENT SPECIFICATION

(11) **EP 4 667 768 B1**
(45) Date of publication and mention of the grant of the patent: **19.08.2026**
(21) Application number: 25181222.8
(22) Date of filing: 06.06.2025
(51) Int. Cl.: F16C 33/72, F16C 35/067, F16C 35/04

(54) **CASING FOR FOOD APPLICATIONS**
GEHÄUSE FÜR LEBENSMITTELANWENDUNGEN
BOÎTIER POUR APPLICATIONS ALIMENTAIRES

(30) Priority: 17.06.2024 IT 202400013831
(43) Date of publication of application: 24.12.2025
(73) Proprietor: Aktiebolaget SKF, 415 50 Göteborg (SE)
(72) Inventor: Bertolini, Andrea A, 54033 Carrara (IT); Baracca, Fausto, 54100 Massa (IT); Jothilingam, Dhanavel, 638154 Pasur (Erode) (IN); Ikramuddin, Mohammed, 585403 Bidar (IN)
(74) Representative: Kohl, Thomas

(56) References cited:
- EP-A1- 1 065 394
- US-A1- 2024 044 372

## Description

### Technical Field of the Invention

The present invention is related to a casing of a support assembly for food applications.

### Background Art

In the food industry, hereinafter also F&B, from the English Food and beverages, there is a growing attention to the development of new machinery and machinery projects aimed at improving the safety and quality of food.

A typical component for these applications is a rotating shaft support assembly. The support assembly includes a casing made of polymeric material, compatible with food applications. The casing is provided with a spherical seat inside which a bearing unit is housed which in turn allows the rotation of a rotating machine shaft with respect to the casing. The casing, however, is a stationary component and is tightened to the frame of a machine. The casing includes a flange portion or base, which has its own surface in contact with the frame of the machinery and has numerous cavities that extend from the contact surface towards the inside of the flange portion. A shaped gasket in elastomeric material, also compatible with food applications, is overmolded in these cavities, which ensures the seal between the casing and the frame of the machinery so as to prevent possible infiltrations of water and bacteria from hiding behind the base of the supports. A hidden colony of bacteria that cannot be washed is evidently a major inconvenience for the F&B industry.

The elastomeric material used in F&B enclosures contains oil. When the casing is mounted to the frame, the seal is compressed and oil escapes from the elastomeric material creating the exudation effect. Even though it is a non-toxic substance, this oil spill is not welcomed by end users.

The phenomenon is very widespread: from tests carried out by the Applicant, all the casings showed similar results in terms of visibility of oil release, regardless of the production batch analyzed. Exudation was found in every test performed. The exudation appears to be caused by a combination of mechanical compression and volumetric constraints of the elastomeric material. Once compressed, in fact, the gasket tends to maintain its volume by expanding into the available free space. If it is not possible for the seal to retain its original volume, oil is released from the elastomeric material.

A solution to this technical problem is the use of "oil free" elastomeric material. This different material, if it solves the technical problem mentioned above, introduces another one. During the manufacturing process, the oil-free material is more difficult to over-mold on the polymeric material of the casing: the oil, in fact, during the injection of the elastomer makes it more fluid allowing it to fill all the cavities of the base of the casing used to receive the elastomer. To obtain the same filling, the pressure could be increased during the injection of the elastomeric material, but this countermeasure carries the real risk of inducing unacceptable deformations of the casing, making it impossible to insert the bearing unit into the spherical seat. Even in the case of deformations of a few tenths, the insertion of the bearing unit into the seat is considerably complicated and, consequently, the life of the support assemblies in general is affected.

US 2024/044 372 A1 discloses a casing according to the preamble of independent claim 1.

### Summary of the Invention

To substantially solve the technical problems highlighted above, the present invention defines a casing, the flange portion of which has internal channels sized so as to allow the use of an oil-free elastomeric material.

Therefore, according to the present invention there is provided a casing of a support assembly for food applications having the characteristics set forth in the independent claim.

Further embodiments of the invention, preferred and/or particularly advantageous, are described according to the characteristics set out in the attached dependent claims.

### Brief Description of the Drawings

The invention will now be described with reference to the attached drawings, which illustrate a non-limiting example of implementation, in which:
- figure 1 is a cross section of a casing for food applications, according to a preferred embodiment of the present invention,
- figure 2 is a bottom view of the casing in figure 1,
- figure 3 illustrates, on an enlarged scale, a first detail of the casing in figure 1, e
- figure 4 illustrates, on an enlarged scale, a second detail of the casing in figure 1.

### Detailed Description

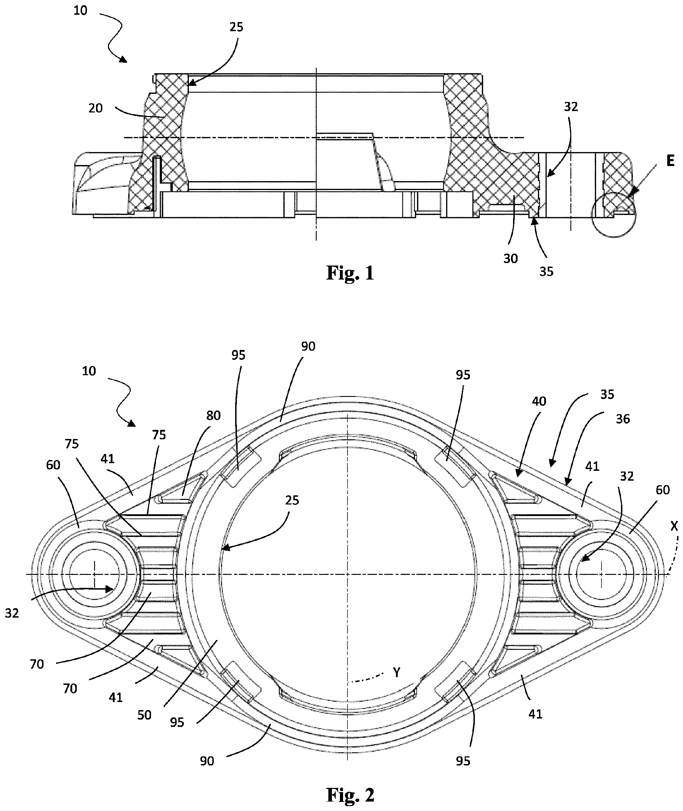

With reference to Figure 1, a casing 10 of a support assembly for food applications comprises:
- a housing portion 20, annular, having a through seat 25 within which a bearing unit is received in a stable and known manner, and
- a flange portion 30 for fixing the casing to the machinery, presenting at least one pair of through holes 32 for housing in a known manner fastening elements, for example bolts, of the casing 10 to a frame of the machinery.

Referring to figure 2 too, the flange portion 30 has an X axis of longitudinal symmetry and a Y axis of transversal symmetry and is in contact with the machinery by means of a surface 35. The surface 35 of the flange portion 30 has a substantially rhomboidal and discontinuous shape in that a plurality of cavities branch out from the surface 35 towards the inside of the flange portion 30 which, by means of an over-molding process, are completely filled with an oil-free elastomeric material. Once the process is completed, therefore, the surface 35 takes on a substantially flat appearance, all its cavities being filled with the elastomeric material.

The cavities present on the surface 35 are:
- a perimeter channel 40 adjacent to and included along the perimeter 36 of the surface 35. This channel includes four substantially rectilinear sections 41 which make up the sides of the rhomboidal figure of the surface 35,
- a curvilinear channel 90 which connects and is in fluid connection with the sections 41 of the perimeter channel 40;
- a circular groove 50 radially internal to the curvilinear channel 90 and which circumscribes the through seat 25 of the bearing unit. This circular groove 50 takes on the shape of a circular crown in plain view and defines a large volume that can be used by the elastomeric material,
- at least one pair of circular channels 60, each of which circumscribes a through hole of the at least one pair of through holes 32 for housing the fastening elements. These circular channels 60 also take on the shape of a circular crown in plain view,
- a plurality of longitudinal grooves 70, internal to the perimeter channel 40 and included, some, between the perimeter channel 40 and the circular groove 50, and, others, between the circular groove 50 and one of the circular channels 60. These grooves 70 are transversely separated from each other by corresponding ribs 75 of the flange portion 30 which present, like the grooves 70, a longitudinal pattern and are included, some, between the perimeter channel 40 and the circular groove 50 and, others, between the circular groove 50 and one of the circular channels 60,
- a plurality of triangular slots 80, transversely external with respect to the longitudinal grooves 70 and included between the perimeter channel 40 and the circular groove 50.

All these cavities, 40, 50, 60, 70, 80, 90, as mentioned, by means of the over-molding process, must be perfectly filled by the elastomeric material that forms the gasket of the flange portion 30 of the casing 10.

To facilitate the filling of the aforementioned cavities, according to the present invention, a new section of the curvilinear channel 90 has been introduced. The same new section has also been introduced for the circular channels 60.

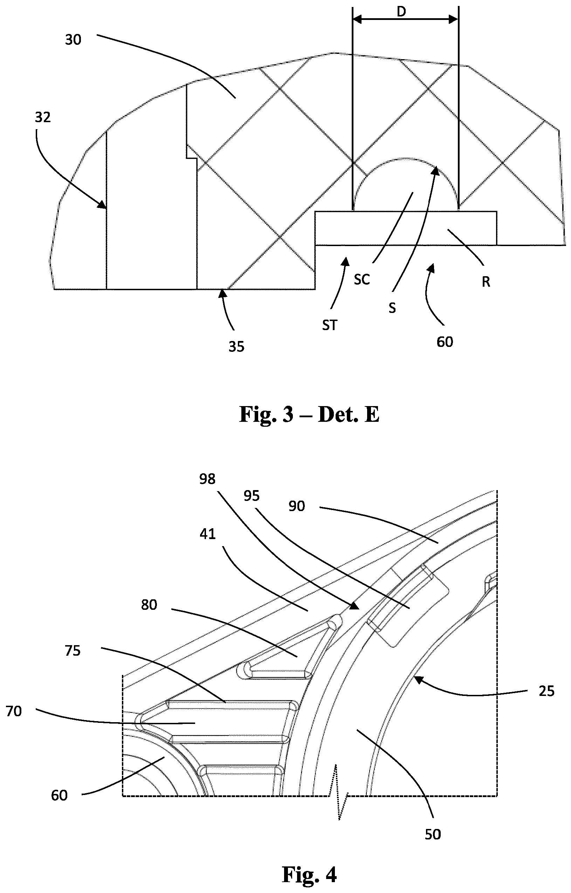

With reference also to figure 3, which refers to the circular channel 60 but can also be referred to the description of the curvilinear channel 90, the curvilinear channel 90 and the circular channels 60 have a wider cross-section ST compared to the section of the known solutions. In fact, the cross-section ST includes a rectangular section R emerging on the surface 35 and, more internal than the rectangular section R but adjacent to it, also a section SC in the shape of a semicircle. This further semicircular SC section, on the one hand, makes it possible, at the same injection pressure, to have a greater flow of elastomeric material, on the other hand, it is more advantageous compared to a rectangular section as it presents a greater ratio between area and perimeter S wetted by the material. In this way, the friction of the elastomeric material along the sliding surface of the channel is reduced and, consequently, the filling of the cavities occurs without having to increase the injection pressure. Keeping the dimensions of the casing unchanged, the diameter D of the semicircular section of the curvilinear channels 90 and the circular channels 60 can be approximately 2 mm.

Thanks to the use of this wider ST cross section and also including the semicircular SC section, the area of the curvilinear canal 90 and the circular canals 60 is more than doubled, with an increase of 110%. Furthermore, the ratio between the cross section of these channels and the wetted perimeter has an increase of approximately 50%.

Advantageously and with reference also to figure 4, the curvilinear channel 90 is in fluid connection with the circular groove 50 by means of a plurality of pockets 95. The pockets 95 can be four in number and can be obtained in symmetrical positions with respect to the axis X, Y. The greater cross section ST of the curvilinear channel 90, the more favorable area / wetted perimeter ratio and the passages made possible by the pockets 95 favor the elastomeric material to best fill the large volume of the circular groove 50 which surrounds the through seat 25 for the bearing unit.

Conveniently, the curvilinear channel 90 is in fluid connection with the triangular slots 80 by means of connected portions 97. The larger cross-section ST of the curvilinear channel 90, the more favorable area / wetted perimeter ratio and the presence of the connected portions 97 allows a greater flow of elastomeric material and therefore better filling of the triangular slots 80 as well.

Evidently, the ST cross section also including the semicircular SC section provides the same beneficial effects - better sliding of the elastomeric material - also for the circular channels 60 which circumscribe the through holes 32 for housing the elements fastening the casing to the frame of the machinery.

Finally, the greater cross section ST of the curvilinear channel 90 and of the circular channels 60, together with the more favorable area / wetted perimeter ratio, also favors better filling of the longitudinal grooves 70.

Ultimately, the present invention allows the use of an oil-free elastomeric material, thus avoiding the unwelcome phenomenon of exudation but at the same time guaranteeing excellent filling of the flange portion of the casing. And this effect is achieved without having to increase the injection pressure of the elastomeric material.

In addition to the embodiment of the invention, as described above, it is to be understood that numerous other variants exist. It is also to be understood that such embodiments are exemplary only and limit neither the scope of the invention, nor its applications, nor its possible configurations. On the contrary, although the above description allows the skilled person to carry out the present invention at least according to an exemplary embodiment thereof, it must be understood that many variants of the components described are possible, without thereby departing from the scope of the invention, as defined in the attached claims.

## Claims

1. Casing (10) of a support assembly for food applications, made of composite material and comprising:
- a housing portion (20) having a through seat (25) within which a bearing unit is received,
- a flange portion (30) for fixing the casing to a machinery, presenting an axis (X) of longitudinal symmetry, an axis (Y) of transversal symmetry, at least one pair of through holes (32) for housing fastening elements of the casing (10) to the machinery and a surface (35) for contact with the machinery,
- a plurality of cavities (40, 50, 60, 70, 80, 90) obtained inside the flange portion (30) and configured to be filled, by over-molding, with oil-free elastomeric material,
the casing (10) being **characterized by** the fact that the plurality of cavities includes:
- a curvilinear channel (90), radially external to the through seat (25), and
- at least a pair of circular channels (60), which surround corresponding through holes (32),
and by the fact that the curvilinear channel (90) and the circular channels (60) present a transverse section (ST) which includes a rectangular section (R) emerging on the surface (35) and, more internal than the rectangular section (R) but adjacent to it, a section (SC) in the shape of a semicircle.

2. Casing (10) according to claim 1, in which the plurality of cavities further comprises a perimeter channel (40) provided with four straight sections (41) connected by the curvilinear channel (90) and in fluid connection with it.

3. Casing (10) according to claim 1 or 2, wherein the plurality of cavities further comprises a circular groove (50) radially internal to the curvilinear channel (90) and which circumscribes the through seat (25) of the bearing unit.

4. Casing (10) according to claim 3, wherein the curvilinear channel (90) is in fluid connection with the circular groove (50) by means of a plurality of pockets (95).

5. Casing (10) according to claim 4, in which the pockets (95) are four in number and are obtained in symmetrical positions with respect to the axis (X) of longitudinal symmetry and the axis (Y) of transversal symmetry.

6. Casing (10) according to one of claims 2 to 5, in which the plurality of cavities further comprises a plurality of longitudinal grooves (70), internal with respect to the perimeter channel (40) and transversely separated from each other by corresponding ribs (75) of the flange portion (30).

7. Casing (10) according to claim 6, in which the plurality of cavities further comprises a plurality of triangular slots (80), transversally external with respect to the longitudinal grooves (70) and included between the perimeter channel (40) and the circular groove (50).

8. Casing (10) according to claim 7, in which the curvilinear channel (90) is in fluid connection with the triangular slots (80) by means of connected portions (97).

9. Support assembly for food applications, comprising a casing (10) according to any of the previous claims, a bearing unit housed in a through seat (25) of the casing (10) and a cover.

## Patentansprüche

1. Gehäuse (10) einer Stützbaugruppe für Lebensmittelanwendungen, das aus einem Verbundmaterial hergestellt ist und Folgendes umfasst:
- einen Gehäuseabschnitt (20) mit einem Sitz (25) mit Durchgangsbohrung, in der eine Lagereinheit aufgenommen ist,
- einen Flanschabschnitt (30) zur Befestigung des Gehäuses an einer Maschine, der eine Achse (X) der Längssymmetrie und eine Achse (Y) der Quersymmetrie, mindestens ein Paar Durchgangslöcher (32), um Elemente zur Befestigung des Gehäuses (10) an der Maschine aufzunehmen, und eine Fläche (35) zum Kontakt mit der Maschine aufweist,
- eine Vielzahl von Kavitäten (40, 50, 60, 70, 80, 90), die in dem Flanschabschnitt (30) erhalten und dazu ausgestaltet sind, durch Umspritzen mit ölfreiem elastomerem Material gefüllt zu werden,
wobei das Gehäuse (10) **dadurch gekennzeichnet ist, dass** die Vielzahl von Kavitäten Folgendes aufweisen:
- einen kurvenförmigen Kanal (90), der radial außerhalb des Sitzes (25) mit Durchgangsbohrung liegt, und
- mindestens ein Paar kreisförmiger Kanäle (60), die entsprechende Durchgangslöcher (32) umgeben,
und dadurch, dass der kurvenförmige Kanal (90) und die kreisförmigen Kanäle (60) einen Querschnitt (ST) aufweisen, der einen rechteckigen Abschnitt (R), der an der Fläche (35) hervorgeht, und einen Abschnitt (SC) in der Form eines Halbkreises aufweist, der weiter innen als der rechteckige Abschnitt (R), aber benachbart zu diesem liegt.

2. Gehäuse (10) nach Anspruch 1, wobei die Vielzahl von Kavitäten ferner einen Umfangskanal (40) umfassen, der mit vier geraden Abschnitten (41) versehen ist, die über den kurvenförmigen Kanal (90) verbunden sind und in Fluidverbindung damit stehen.

3. Gehäuse (10) nach Anspruch 1 oder 2, wobei die Vielzahl von Kavitäten ferner eine kreisförmige Nut (50) umfassen, die radial nach innen zu dem kurvenförmigen Kanal (90) liegt und die den Sitz (25) mit Durchgangsbohrung der Lagereinheit umgibt.

4. Gehäuse (10) nach Anspruch 3, wobei der kurvenförmige Kanal (90) mittels einer Vielzahl von Taschen (95) mit der kreisförmigen Nut (50) in Fluidverbindung steht.

5. Gehäuse (10) nach Anspruch 4, wobei vier Taschen (95) vorliegen und diese sich in symmetrischen Positionen bezüglich der Achse (X) der Längssymmetrie und der Achse (Y) der Quersymmetrie befinden.

6. Gehäuse (10) nach einem der Ansprüche 2 bis 5, wobei die Vielzahl von Kavitäten ferner eine Vielzahl von Längsnuten (70) umfassen, die von dem Umfangskanal (40) nach innen liegen und über entsprechende Rippen (75) des Flanschabschnitts (30) quer voneinander getrennt sind.

7. Gehäuse (10) nach Anspruch 6, wobei die Vielzahl von Kavitäten ferner eine Vielzahl von dreieckigen Schlitzen (80) umfassen, die bezüglich der Längsnuten (70) quer nach außen liegen und zwischen dem Umfangskanal (40) und der kreisförmigen Nut (50) liegen.

8. Gehäuse (10) nach Anspruch 7,wobei der kurvenförmige Kanal (90) mittels verbundener Abschnitte (97) in Fluidverbindung mit den dreieckigen Schlitzen (80) steht.

9. Stützbaugruppe für Lebensmittelanwendungen, umfassend ein Gehäuse (10) nach einem der vorhergehenden Ansprüche, eine Lagereinheit, die in einem Sitz (25) mit einer Durchgangsbohrung des Gehäuses (10) untergebracht ist, und eine Abdeckung.

## Revendications

1. Carter (10) d'un ensemble de support pour applications alimentaires, réalisé en matériau composite et comportant :
- une partie corps (20) ayant un siège traversant (25) dans lequel est reçue une unité de palier,
- une partie bride (30) pour la fixation du carter à une machine, présentant un axe (X) de symétrie longitudinale, un axe (Y) de symétrie transversale, au moins une paire de trous traversants (32) destinés à recevoir des éléments de fixation du carter (10) à la machine et une surface (35) de contact avec la machine,
- une pluralité de cavités (40, 50, 60, 70, 80, 90) formées à l'intérieur de la partie bride (30) et conçues pour être remplies, par surmoulage, d'un matériau élastomère exempt d'huile,
le carter (10) étant **caractérisé par le fait que** la pluralité de cavités comprend :
- un canal curviligne (90), radialement extérieur au siège traversant (25), et
- au moins une paire de canaux circulaires (60), qui entourent des trous traversants (32) correspondants,
et **par le fait que** le canal curviligne (90) et les canaux circulaires (60) présentent une section transversale (ST) qui comporte une section rectangulaire (R) débouchant sur la surface (35) et, plus intérieure que la section rectangulaire (R) mais adjacente à celle-ci, une section (SC) en forme de demi-cercle.

2. Carter (10) selon la revendication 1, dans lequel la pluralité de cavités comprend en outre un canal périphérique (40) pourvu de quatre sections rectilignes (41) reliées par le canal curviligne (90) et en liaison fluidique avec celui-ci.

3. Carter (10) selon la revendication 1 ou 2, dans lequel la pluralité de cavités comprend en outre une rainure circulaire (50) radialement intérieure au canal curviligne (90) et qui encercle le siège traversant (25) de l'unité de palier.

4. Carter (10) selon la revendication 3, dans lequel le canal curviligne (90) est en communication fluidique avec la rainure circulaire (50) par le biais d'une pluralité de poches (95).

5. Carter (10) selon la revendication 4, dans lequel les poches (95) sont au nombre de quatre et sont formées dans des positions symétriques par rapport à l'axe (X) de symétrie longitudinale et à l'axe (Y) de symétrie transversale.

6. Carter (10) selon l'une des revendications 2 à 5, dans lequel la pluralité de cavités comprend en outre une pluralité de rainures longitudinales (70), intérieures par rapport au canal périphérique (40) et séparées transversalement les unes des autres par des nervures (75) correspondantes de la partie bride (30).

7. Carter (10) selon la revendication 6, dans lequel la pluralité de cavités comprend en outre une pluralité de fentes triangulaires (80), transversalement extérieures par rapport aux rainures longitudinales (70) et formées entre le canal périphérique (40) et la rainure circulaire (50).

8. Carter (10) selon la revendication 7, dans lequel le canal curviligne (90) est en communication fluidique avec les fentes triangulaires (80) par le biais de parties reliées (97).

9. Ensemble de support pour applications alimentaires, comprenant un carter (10) selon l'une quelconque des revendications précédentes, une unité de palier logée dans un siège traversant (25) du carter (10) et un couvercle.
